# EUROPEAN PATENT SPECIFICATION

(11) **EP 2 482 494 B1**
(45) Date of publication and mention of the grant of the patent: **24.01.2018**
(21) Application number: 11170519.0
(22) Date of filing: 20.06.2011
(51) Int. Cl.: H04L 12/24, H04L 12/28, H04L 12/26

(54) **Measuring CPE bandwidth**
Messung der Teilnehmerausrüstungsbandbreite
Mesure de bande passante CPE

(30) Priority: 27.01.2011 EP 11152378
(43) Date of publication of application: 01.08.2012
(73) Proprietor: Telia Company AB, 106 63 Stockholm (SE)
(72) Inventor: Korjonen, Antti-Jussi, 33450 Siivikkala (FI)
(74) Representative: Papula Oy

(56) References cited:
- GB-A- 2 444 096
- US-A1- 2005 195 746
- US-A1- 2006 274 760
- US-A1- 2009 113 045

## Description

### FIELD OF THE INVENTION

The invention relates to measuring service quality in a data network, especially the bandwidth between the Gateway and the Customer Premises Equipment.

### BACKGROUND OF THE INVENTION

The service quality is measured in a data network for example to verify the Service Level Agreement (SLA) between the network operator and the customer or, from the operator's perspective, for capacity management or fault isolation purposes. It is also important to verify during the installation procedure of the Customer Premises Equipment or any new network connection that the bandwidth fulfills the customer's Service Level Agreement. The bandwidth measurement is one part of a typical Service Level Agreement (SLA) between the customer and a network operator. Other examples of SLA components are fault classification, service restoration time vs. response time, service accessibility, the percentage of the time services will be available, the number of simultaneous users, other performance benchmarks or help desk response time.

The network bandwidth may be measured with traditional probe devices, which are used locally at the customer's premises. Using the probe may be difficult, as the device has to be installed locally by a person working for the network operator, thus creating personnel costs, or the probe has to be shipped to the customer. Usually a free Ethernet port is required to install the probe to the Customer Premises Equipment.

The probe device generates downstream or upstream traffic and measures only generated traffic. If, for example, the customer is downloading a large FTP file, the probe test will not give the available maximum bandwidth. Additionally, the software running inside the router has similar problems as the separate probe, because the software running at the router is limited by the router CPU resources, which limits the bandwidth testing capabilities.

US20060274760A1 discloses an Internet packet quality monitor and a data transmission quality monitoring method for internet protocol network, which involves determining quality metric associated with links based on quality metrics associated with transmission path.

### PURPOSE OF THE INVENTION

The purpose of the invention is to introduce a method, a system and a computer program for measuring network bandwidth without the need for probe devices. The present invention reduces the costs required to verify the Service Level Agreement between the network operator and the customer.

### SUMMARY

The invention discloses a method and a system for measuring network bandwidth in a data network, wherein the system comprises means for executing the steps of the method.

The data network comprises a network management system, a Gateway connected to the network management system and a Customer Premises Equipment connected to the Gateway. The network management system is connected to a network operator's network element. The Gateway is a router between one network operator's area and possible areas administered by other network operators. The gateway may be connected to the Customer Premises Equipment by an L3 type connection. A Customer Premises Equipment is a device that terminates Wide Area Network, WAN, to a Local Area Network, LAN.

An interface is created to the Gateway comprising a pre-defined IP address pointing to the Customer Premises Equipment. The interface may be provided according to Virtual Routing and Forwarding technology, VRF. The interface may be a subinterface according to MPLS (Multiprotocol Label Switching). A route is created from the Gateway to the Customer Premises Equipment. A UDP (User Datagram Protocol) packet flood is created between the Gateway and the pre-defined IP address pointing to the Customer Premises Equipment by the UDP packet looping between the Gateway and the Customer Premises Equipment. This UDP packet flood is arranged to consume essentially all available bandwidth between the Gateway and the Customer Premises Equipment within a pre-defined test period by looping the packet. The network bandwidth is measured from the amount of data received at the Gateway and the Customer Premises Equipment. The amount of data comprises the data carried by the looping UDP packet and possible other data traffic from the network. The other data traffic may be originated from customer's own network usage that takes place during the measurement procedure.

The test data packet used to consume all available bandwidth is a UDP packet (UDP, User Datagram Protocol). The UDP protocol provides a procedure for application programs to send messages to other programs with a minimum of protocol mechanism. The protocol is transaction oriented, and delivery and duplicate protection are not guaranteed.

In one embodiment of the invention the UDP packet flood is created by sending the UDP packet from the network management system to the Gateway interface pointing to the pre-defined IP address. The UDP packet is sent from the Gateway to the pre-defined IP address and received by the Customer Premises Equipment. The UDP packet is sent back from the Customer Premises Equipment to the Gateway interface pointing to the pre-defined IP address, thereby creating a loop between the Gateway and the Customer Premises Equipment.

In one embodiment a Time To Live parameter, TTL, is set up for the UDP packet. The number of passed data packets is calculated from the SNMP (Simple Network Management Protocol) counter readings and the time elapsed during the looping of the UDP packet. The Time To Live parameter is carried inside the UDP packet.

In one embodiment analyzing the network bandwidth comprises the steps of reading ifInOctets at the Gateway for the interface logically connected to the Customer Premises Equipment, thereby acquiring the amount of data received at the Gateway, and reading ifInOctets at the Customer Premises Equipment for the interface logically connected to the Gateway, thereby acquiring the amount of data received at the Customer Premises Equipment. The ifInOctets is a counter function used for example with SNMP, Simple Network Management Protocol.

In one embodiment the time elapsed is calculated from the sysUpTime SNMP variable during the looping of the UDP packet. SysUpTime SNMP variable is queried from the same network element, the Customer Premises Equipment or the Gateway, as the SNMP counter. The sysUpTime variable query may be executed in the same query as ifInOctects, ensuring that both values are obtained as close to each other as possible. Preferably both values are obtained simultaneously. This provides a time stamp to the SNMP counter reading and improves accuracy of the bandwidth measurement. A simple method of calculating the time elapsed is by subtracting the start time of the measurement process from the end time.

In one embodiment the minimum size of the UDP packet is defined by the capability of consuming the available bandwidth between the Gateway and the Customer Premises Equipment and the maximum size by not fragmenting while looping between the Gateway and the Customer Premises Equipment. Any smaller data packet would not flood the transmission path entirely and it would not be possible to achieve the maximum transmission rate of the network, resulting to a false measurement result. If the UDP packet is too large, either the Customer Premises Equipment or the Gateway router could become congested for the lack of central processing power. Too large a UDP packet may become fragmented at some of the network elements. The fragmentation means that the packet would no longer proceed through all network elements and the method would not function. The actual size of the UDP packet depends on the capabilities of the elements on the transmission path and may have to be defined by testing with different packet sizes. The packet size testing procedure may be an automated process. The purpose of the arrangement is to test the transmission path between the Gateway and the Customer Premises Equipment. By arranging the size of the test packet to a suitable level and limiting the requirements only to the routing function - for which routers are optimized - routers are capable to flood the available bandwidth entirely.

The network management system, the Gateway and the Customer Premises Equipment comprise at least one processor and at least one memory including computer program code. The at least one memory and the computer program code are configured, with the at least one processor, to cause these devices to perform according to the method described herein.

The benefit of the invention is that the Customer Premises Equipment bandwidth can be measured both upstream and downstream without installing any probes. There is also no need for a sophisticated packet generator, because the tester traffic will loop between the Customer Premises Equipment and the Gateway. The logistics for installing a new Customer Premises Equipment is more economical. Also, the user of the Customer Premises Equipment may continue using the IP related network usage without significant disturbance. This enables the network operator to test the network bandwidth of the Customer Premises Equipment without interrupting the service. Network operator may use the invention to test the network bandwidth and the Service Level Agreement characteristics without notifying the user of the Customer Premises Equipment and save a lot of time in network management, and particularly, in error detecting functions.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an example embodiment of the present invention, and
**Fig. 2** is a flow chart of an example embodiment of the invention.

### DETAILED DESCRIPTION OF THE INVENTION

Reference will now be made in detail to the embodiments of the present invention, examples of which are illustrated in the accompanying drawings.

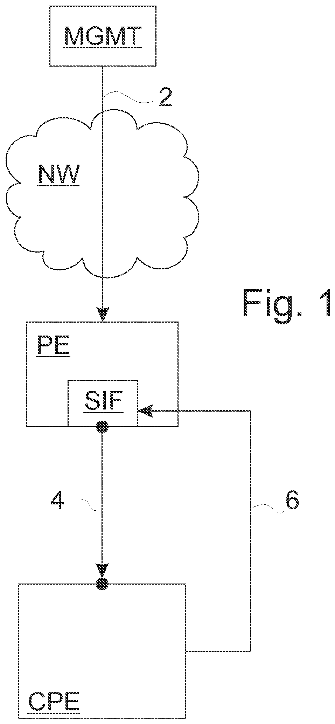

In figure 1 a block diagram of an example embodiment of the invention illustrates the elements for creating the packet and initiating the packet loop. A network management system MGMT may comprise a network operator's management environment or a smaller device that has only a limited set of functions. The network management system MGMT comprises a packet generator, which may be implemented by hardware or software. In one embodiment generating the packet is implemented by iPerf software installed to the network management system MGMT. The Network management system MGMT may also comprise tools for analyzing the measurement result.

The network management system MGMT generates the UDP packet and sends at least one packet to the Gateway PE via a data network NW, arrow 2. The data network NW may be operated by the network operator. In one embodiment the Gateway PE is a Provider Edge, which is a router located at the outer edge of the network operator's own network. The Gateway PE may be capable of utilizing several network protocols, such as Multiprotocol Label Switching (MPLS) or similar.

The Gateway PE comprises an interface SIF, which is pointing to the Customer Premises Equipment CPE. The Customer Premises Equipment CPE comprises a default route to the Gateway for all packets that cannot be addressed within the LAN network connected to the Customer Premises Equipment CPE. The Gateway PE is connected to the Customer Premises Equipment CPE by an L3 type connection. The transmission path may comprise Metro Ethernet or DSLAM devices.

In one embodiment the Gateway PE send a streaming flow of UDP packets, arrow 4, thereby creating a flow to the Gateway PE in order to fully flood the transmission path between the Gateway PE and the Customer Premises Equipment CPE. The Customer Premises Equipment CPE may receive also other data with the UDP packet. The Customer Premises Equipment comprises a function for measuring the received data. The measurement result comprises both the UDP packets and the other data.

The Customer Premises Equipment CPE returns the UDP packets to the Gateway PE, arrow 6. The Gateway PE comprises a function for measuring the received data. The measurement data may comprise the UDP packets and other data received by the port. One example of such measurement function is the ifInOctets used at SNMP.

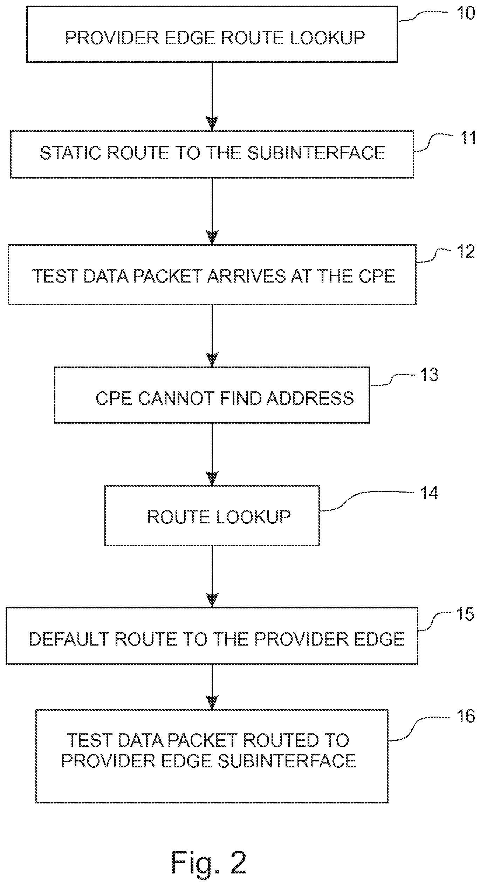

Figure 2 is a flow chart of an example embodiment of the invention. In the following paragraphs the Gateway PE comprises an interface SIF pointing to the Customer Premises Equipment CPE, wherein the address of the Gateway PE is 10.10.10.1/30 and that of the Customer Premises Equipment CPE is 10.10.10.2/30.

The network management system sends a UDP packet to the Gateway PE using Virtual Routing and Forwarding. The Gateway PE is a Provider Edge in this example. The process starts by a Provider Edge PE route lookup, block 10.

The Provider Edge comprises a static route to the interface SIF, block 11, routing the UDP packet to the Customer Premises Equipment CPE. The routing command may be as follows:
ip route vrf test 172.22.1.81 255.255.255.255 10.10.10.2

The IP address 172.22.1.81 is the pre-defined address used to route the packet onwards from the Customer Premises Equipment CPE. The pre-defined IP address can be a part of the IP address space reserved for testing purposes only, and it should not point to any device within the address space of the Customer Premises Equipment CPE. This may be one host route that is not utilized in any other application.

The UDP packet arrives at the Customer Premises Equipment CPE, block 12. As the CPE cannot find the address, block 13, it executes a route lookup, block 14. As there is no IP address that relates to the pre-defined IP address, the CPE reverts to the default route which is set to the Provider Edge PE, block 15. The default route is configured to the Customer Premises Equipment CPE before delivering it to the customer or it may be later configured by the network management system. In one embodiment the CPE sends to the network management system an ICMP unreachable message, if the CPE is the target for the UDP stream. The routing command may be as follows:
ip route 0.0.0.0 0.0.0.0 10.10.10.1

The UDP packet is routed towards the Provider Edge interface SIF 10.10.10.1, block 16. This returns the process to block 10 and the UDP packet starts to loop between the Provider Edge PE and the Customer Premises Equipment CPE.

The size of the UDP packet must be large enough to consume all available bandwidth by looping. If the size is too small, then the processing speed of one of the network elements becomes a significant factor and may act as a bottleneck. On the other hand, too large a UDP packet may become fragmented. In one embodiment the "Do not fragment" flag is set, thus preventing looping the fragmented packet. An example UDP packet size is 5 megabytes/second, which fulfills this criterion for a 100/100 megabit network connection.

Any network attacks are prohibited by restricting the usage to VRF, where the VPN connection between the network management system and the Gateway PE is closed from unauthorized use.

The Customer Premises Equipment CPE may have asymmetric upstream and downstream connections rates. Either connection may become a bottleneck for consuming the available bandwidth for the other connection when using only one UDP packet. This is avoided by sending several UDP packets continuously from the network management system MGMT to the Gateway PE, thereby assuring that the downstream connection for the Customer Premises Equipment CPE is fully flooded.

The measurement procedure begins by sending a constant feed of UDP packets to the Gateway PE, which starts the looping of UDP packets. The full bandwidth flooding may occur only after several seconds. Therefore the best result is achieved when the measurement starts by registering the initial values of ifInOctets from the Gateway PE and the Customer Premises Equipment CPE after initial setting time. The flooding does not usually begin immediately, so the measurement result improves after leaving the process some time to set. This setting time may vary from couple of seconds to few minutes; it can be adjusted after the statistical analysis of several measurement results appears to be reliable. Similar wait time is expected for the end values of ifInOctets, in other words the end values of ifInOctets from the Gateway PE and the Customer Premises Equipment CPE are read before stopping the feed of UDP packets.

The end value and the initial value of ifInOctets may be subtracted from each other and the result may be divided by the time used between registering both values. This calculation results in measuring the service quality and the actual bandwidth available both downstream and upstream for the Customer Premises Equipment CPE.

One detailed example of the invention wherein both ifInOctets and sysUpTime are applied is descriped herein.

The Gateway PE creates a route for a pre-specified IP address pointing towards Customer Premises Equipment CPE. A traffic generator may be used to generate UDP packets towards the pre-specified IP address. The UDP packets have IP Time To Live TTL set to 255 and will loop in the logical customer link until TTL expires. This way even smaller amount of UDP packets will generate enough traffic to measure higher bandwidths. At this point a small setting period is waited to ensure that the link is fully flooded.

The Gateway PE reads sysUpTime and ifInOctets for the subinterface SIF logically connected to the Customer Premises Equipment CPE (CPE->PE traffic), and retries until the response is received. The Customer Premises Equipment CPE reads sysUpTime and ifInOctets for interface logically connected to the Gateway PE (PE->CPE traffic), and retries until the response is received. The Gateway PE reads sysUpTime and ifInOctets for interface logically connected to the Gateway PE (PE->CPE traffic), and retries until the response is received. The Customer Premises Equipment CPE reads sysUpTime and ifInOctets for the interface logically connected to the Gateway PE (PE->CPE traffic), and retries until the response is received.

The downstream bandwidth per second is calculated by subtracting CPE ifInOctets counters and dividing by subtracted CPE sysUpTime timeticks. The upstream bandwidth per second is calculated by subtracting Gateway PE ifInOctets counters and dividing by subtracted Gateway PE sysUpTime timeticks to get the upstream bandwidth per second. After this the traffic generator may be stopped and the Gateway PE may remove the configured route. Ifinoctets used may be 32 bit ifInOctets or 64bit ifHCInOctets, depending on the device support. The benefit of using ifHCInOctets is in improved accuracy of measuring high speed links.

The network bandwidth measurement according to the invention gives information about the Customer Premises Equipment CPE throughput performance both upstream and downstream. The performance information may be also part of measuring The QoS (Quality of Service) of the network connection. If the test packets or the UDP packets sent to looping between the Gateway PE and the Customer Premises Equipment CPE are marked with an appropriate QoS class, the invention may be used to measure the bandwidth of QoS class. The marking is done for example in a router in the path of the packet generator or traffic generator. When the Gateway PE is the Provider Edge located at the outer edge of the network operator's own network, the invention is useful in differentiating problems and certifying performance metrics at the environment where the network operator is not offering the final connection to the Customer Premises Equipment CPE. An example of this situation is an agreement between operators, where the final connection is purchased from another operator. With the present invention also the network operator may monitor the Service Level of the another operator providing the final connection.

Embodiments of the present invention may be implemented in software, hardware, application logic or a combination of software, hardware and application logic. In an example embodiment, the application logic, software or instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

If desired, the different functions discussed herein may be performed in a different order and/or concurrently with each other.

Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for measuring network bandwidth in a data network comprising a network management system (MGMT), a Gateway (PE) connected to the network management system (MGMT) and a Customer Premises Equipment (CPE) connected to the Gateway (PE), **characterized in that** the method comprises the steps of:
creating an interface (SIF) to the Gateway (PE) comprising a pre-defined IP address pointing to the Customer Premises Equipment (CPE); wherein the pre-defined IP address is a part of a IP address space reserved for testing purposes only, the pre-defined IP address does not point to any device within the address space of the Customer Premises Equipment (CPE) and the Customer Premises Equipment (CPE) comprises a return IP route to the Gateway (PE);
creating a User Datagram Protocol, UDP packet flood looping between the pre-defined IP address pointing to the Customer Premises Equipment (CPE) and the Gateway (PE), said UDP packet flood consuming the available bandwidth between the Gateway (PE) and the Customer Premises Equipment (CPE); and
measuring the bandwidth from the amount of data received at the Gateway (PE) and at the Customer Premises Equipment (CPE).

2. The method according to claim 1, **characterized in that** creating the UDP packet flood comprises the steps of:
sending the UDP packet from the network management system (MGMT) to the Gateway interface (SIF) pointing to the pre-defined IP address;
sending the UDP packet from the Gateway (PE) to the pre-defined IP address and receiving it by the Customer Premises Equipment (CPE);
sending the UDP packet from the Customer Premises Equipment (CPE) to the Gateway interface (SIF) pointing to the pre-defined IP address, thereby creating a loop between the Gateway (PE) and the Customer Premises Equipment (CPE).

3. The method according to claim 2, **characterized in that** the method comprises the steps of:
setting up a Time To Live parameter for the UDP packet; and
calculating the number of passed data packets from the Simple Network Management Protocol, SNMP counter readings and the time elapsed during the looping of the test data packet.

4. The method according to claim 3, **characterized in that** analyzing network bandwidth comprises the steps of:
reading ifInOctets at the Gateway (PE) for the interface (SIF) logically connected to the Customer Premises Equipment (CPE), thereby acquiring the amount of data received at the Gateway (PE);
reading ifInOctets at the Customer Premises Equipment (CPE) for the interface (SIF) logically connected to the Gateway (PE), thereby acquiring the amount of data received at the Customer Premises Equipment (CPE).

5. The method according to claim 3, **characterized in that** the method comprises the step of calculating the time elapsed from the sysUpTime SNMP variable during the looping of the UDP packet.

6. The method according to claim 1, **characterized in that** the minimum size of the UDP packet is defined by the capability of consuming the available bandwidth between the Gateway (PE) and the Customer Premises Equipment (CPE) and the maximum size by not fragmenting while looping between the Gateway (PE) and the Customer Premises Equipment (CPE).

7. A system for measuring network bandwidth in a data network comprising a network management system (MGMT), a Gateway (PE) connected to the network management system (MGMT) and a Customer Premises Equipment (CPE) connected to the Gateway (PE), **characterized in that** the system comprises:
means for creating an interface (SIF) to the Gateway (PE) comprising a pre-defined IP address pointing to the Customer Premises Equipment (CPE); wherein the pre-defined IP address is a part of a IP address space reserved for testing purposes only, the pre-defined IP address does not point to any device within the address space of the Customer Premises Equipment (CPE) and the Customer Premises Equipment (CPE) comprises a return IP route to the Gateway (PE);
means for creating a User Datagram Protocol, UDP packet flood looping between the pre-defined IP address at the Customer Premises Equipment (CPE) and the Gateway (PE), said UDP packet flood consuming the available bandwidth between the Gateway (PE) and the Customer Premises Equipment (CPE); and
means for measuring the bandwidth from the amount of data received at the Gateway (PE) and at the Customer Premises Equipment (CPE).

8. The system according to claim 7, **characterized in that** the means for creating the UDP packet flood comprises:
means for sending the UDP packet from the network management system to the Gateway interface (SIF) pointing to the pre-defined IP address;
means for sending the UDP packet from the Gateway (PE) to the pre-defined IP address and receiving it by the Customer Premises Equipment (CPE);
means for sending the UDP packet from the Customer Premises Equipment (CPE) to the Gateway interface (SIF) pointing to the pre-defined IP address, thereby creating a loop between the Gateway (PE) and the Customer Premises Equipment (CPE).

9. The system according to claim 8, **characterized in that** the system comprises:
means for setting up a Time To Live parameter for the UDP packet; and
means for calculating the number of passed data packets from the Simple Network Management Protocol counter readings and the time elapsed during the looping of the UDP packet.

10. The system according to claim 9, **characterized in that** means for analyzing the network bandwidth comprises:
means for reading ifInOctets at the Gateway (PE) for the interface (SIF) logically connected to the Customer Premises Equipment (CPE), thereby acquiring the amount of data received at the Gateway (PE);
means for reading ifInOctets at the Customer Premises Equipment (CPE) for the interface (SIF) logically connected to the Gateway (PE), thereby acquiring the amount of data received at the Customer Premises Equipment (CPE).

11. The system according to claim 9, **characterized by** comprising means for calculating the time elapsed from the sysUpTime SNMP variable during the looping of the UDP packet.

12. The system according to claim 7, **characterized in that** the minimum size of the UDP packet is defined by the capability of consuming the available bandwidth between the Gateway (PE) and the Customer Premises Equipment (CPE) and the maximum size by not fragmenting while looping between the Gateway (PE) and the Customer Premises Equipment (CPE).

13. A computer program product comprising a computer-readable medium bearing computer program code which when executed by a computer executes all the steps of the method according to claims 1 to 6.

## Patentansprüche

1. Verfahren zum Messen einer Netzwerkbandbreite in einem Datennetz, das ein Netzwerk-Managementsystem (MGMT), ein Gateway (PE), das mit dem Netzwerk-Managementsystem (MGMT) verbunden ist, und ein Teilnehmernetzgerät (CPE), das mit dem Gateway (PE) verbunden ist, umfasst, **dadurch gekennzeichnet, dass** das Verfahren die Folgenden Schritte umfasst:
Erzeugen einer Schnittstelle (SIF) zum Gateway (PE), die eine vorgegebene IP-Adresse umfasst, die auf das Teilnehmernetzgerät (CPE) verweist; wobei die vorgegebene IP-Adresse zu einem IP-Adressraum gehört, der nur für Testzwecke reserviert ist, wobei die vorgegebene IP-Adresse auf keine Vorrichtung innerhalb des Adressraums des Teilnehmernetzgeräts (CPE) zeigt und wobei das Teilnehmernetzgerät (CPE) einen Rückgabe-IP-Pfad zum Gateway (PE) umfasst;
Erzeugen einer User Datagram Protocol, UDP, Paketflut, die zwischen der vorgegebenen IP-Adresse, die auf das Teilnehmernetzgerät (CPE) verweist, und dem Gateway (PE) hin- und herläuft, wobei die UDP-Paketflut die verfügbare Bandbreite zwischen dem Gateway (PE) und dem Teilnehmernetzgerät (CPE) aufbraucht; und
Messen der Bandbreite basierend auf der am Gateway (PE) und am Teilnehmernetzgerät (CPE) empfangenen Datenmenge.

2. Verfahren nach Anspruch 1, **dadurch gekennzeichnet, dass** das Erzeugen der UDP-Paketflut die folgenden Schritte umfasst:
Senden des UDP-Pakets vom Netzwerk-Managementsystem (MGMT) zur Gateway-Schnittstelle (SIF), die auf die vorgegebene IP-Adresse verweist;
Senden des UDP-Pakets vom Gateway (PE) zur vorgegebenen IP-Adresse und Empfangen von diesem durch das Teilnehmernetzgerät (CPE);
Senden des UDP-Pakets vom Teilnehmernetzgerät (CPE) zur Gateway-Schnittstelle (SIF), die auf die vorgegebene IP-Adresse verweist, wodurch eine Schleife zwischen dem Gateway (PE) und dem Teilnehmernetzgerät (CPE) hergestellt wird.

3. Verfahren nach Anspruch 2, **dadurch gekennzeichnet, dass** das Verfahren die folgenden Schritte umfasst:
Einrichten eines Time-To-Live-Parameters für das UDP-Paket; und
Berechnen der Zahl durchgereichter Datenpakete aus den Zählerablesungen des Simple Network Management Protocol, SNMP, und der verstrichenen Zeit während des Hin- und Herlaufens des Testdatenpakets.

4. Verfahren nach Anspruch 3, **dadurch gekennzeichnet, dass** das Analysieren der Netzwerkbandbreite die folgenden Schritte umfasst:
Auslesen von iflnOctets am Gateway (PE) für die Schnittstelle (SIF), die logisch mit dem Teilnehmernetzgerät (CPE) verbunden ist, wodurch die am Gateway (PE) empfangene Datenmenge erfasst wird;
Auslesen von iflnOctets am Teilnehmernetzgerät (CPE) für die Schnittstelle (SIF), die logisch mit dem Gateway (PE) verbunden ist, wodurch die am Teilnehmernetzgerät (CPE) empfangene Datenmenge erfasst wird.

5. Verfahren nach Anspruch 3, **dadurch gekennzeichnet, dass** das Verfahren einen Schritt zum Berechnen der verstrichenen Zeit aus der sysUpTime SNMP-Variable während des Hin- und Herlaufens des Testdatenpakets umfasst.

6. Verfahren nach Anspruch 1, **dadurch gekennzeichnet, dass** die minimale Größe des UDP-Pakets durch die Fähigkeit definiert wird, die verfügbare Bandbreite zwischen dem Gateway (PE) und dem Teilnehmernetzgerät (CPE) aufzubrauchen, und die maximale Größe dadurch, dass es nicht fragmentiert während es zwischen dem Gateway (PE) und dem Teilnehmernetzgerät (CPE) hin- und herläuft.

7. System zum Messen einer Netzwerkbandbreite in einem Datennetz, das ein Netzwerk-Managementsystem (MGMT), ein Gateway (PE), das mit dem Netzwerk-Managementsystem (MGMT) verbunden ist, und ein Teilnehmernetzgerät (CPE), das mit dem Gateway (PE) verbunden ist, umfasst, **dadurch gekennzeichnet, dass** das System Folgendes umfasst:
ein Mittel zum Erzeugen einer Schnittstelle (SIF) zum Gateway (PE), die eine vorgegebene IP-Adresse umfasst, die auf das Teilnehmernetzgerät (CPE) verweist; wobei die vorgegebene IP-Adresse zu einem IP-Adressraum gehört, der nur für Testzwecke reserviert ist, wobei die vorgegebene IP-Adresse auf keine Vorrichtung innerhalb des Adressraums des Teilnehmernetzgeräts (CPE) zeigt und wobei das Teilnehmernetzgerät (CPE) einen Rückgabe-IP-Pfad zum Gateway (PE) umfasst;
ein Mittel zum Erzeugen einer User Datagram Protocol, UDP, Paketflut, die zwischen der vorgegebenen IP-Adresse am Teilnehmernetzgerät (CPE) und dem Gateway (PE) hin- und herläuft, wobei die UDP-Paketflut die verfügbare Bandbreite zwischen dem Gateway (PE) und dem Teilnehmernetzgerät (CPE) aufbraucht; und
ein Mittel zum Messen der Bandbreite basierend auf der am Gateway (PE) und am Teilnehmernetzgerät (CPE) empfangenen Datenmenge.

8. System nach Anspruch 7, **dadurch gekennzeichnet, dass** das Mittel zum Erzeugen der UDP-Paketflut Folgendes umfasst:
ein Mittel zum Senden des UDP-Pakets vom Netzwerk-Managementsystem zur Gateway-Schnittstelle (SIF), die auf die vorgegebene IP-Adresse verweist;
ein Mittel zum Senden des UDP-Pakets vom Gateway (PE) zur vorgegebenen IP-Adresse und Empfangen von diesem durch das Teilnehmernetzgerät (CPE);
ein Mittel zum Senden des UDP-Pakets vom Teilnehmernetzgerät (CPE) zur Gateway-Schnittstelle (SIF), die auf die vorgegebene IP-Adresse verweist, wodurch eine Schleife zwischen dem Gateway (PE) und dem Teilnehmernetzgerät (CPE) hergestellt wird.

9. System nach Anspruch 8, **dadurch gekennzeichnet, dass** das System Folgendes umfasst:
ein Mittel zum Einrichten eines Time-To-Live-Parameters für das UDP-Paket; und
ein Mittel zum Berechnen der Zahl durchgereichter Datenpakete aus den Zählerablesungen des Simple Network Management Protocol, SNMP, und der verstrichenen Zeit während des Hin- und Herlaufens des Testdatenpakets.

10. System nach Anspruch 9, **dadurch gekennzeichnet, dass** das Mittel zum Analysieren der Netzwerkbandbreite Folgendes umfasst:
ein Mittel zum Auslesen von iflnOctets am Gateway (PE) für die Schnittstelle (SIF), die logisch mit dem Teilnehmernetzgerät (CPE) verbunden ist, wodurch die am Gateway (PE) empfangene Datenmenge erfasst wird;
ein Mittel zum Auslesen von iflnOctets am Teilnehmernetzgerät (CPE) für die Schnittstelle (SIF), die logisch mit dem Gateway (PE) verbunden ist, wodurch die am Teilnehmernetzgerät (CPE) empfangene Datenmenge erfasst wird.

11. System nach Anspruch 9, **dadurch gekennzeichnet, dass** es ein Mittel zum Berechnen der verstrichenen Zeit aus der sysUpTime SNMP-Variable während des Hin- und Herlaufens des Testdatenpakets umfasst.

12. System nach Anspruch 7, **dadurch gekennzeichnet, dass** die minimale Größe des UDP-Pakets durch die Fähigkeit definiert wird, die verfügbare Bandbreite zwischen dem Gateway (PE) und dem Teilnehmernetzgerät (CPE) aufzubrauchen, und die maximale Größe dadurch, dass es nicht fragmentiert während es zwischen dem Gateway (PE) und dem Teilnehmernetzgerät (CPE) hin- und herläuft.

13. Computerprogrammprodukt, das ein computerlesbares Medium umfasst, das Computerprogrammcode enthält, der, wenn er von einem Computer ausgeführt wird, alle Schritte des Verfahrens nach den Ansprüchen 1 bis 6 ausführt.

## Revendications

1. Procédé de mesure d'une bande passante de réseau dans un réseau de données comprenant un système de gestion de réseau (MGMT), une passerelle (PE) connectée au système de gestion de réseau (MGMT) et un équipement de local d'abonné (CPE) connecté à la passerelle (PE), **caractérisé en ce que** le procédé comprend les étapes suivantes :
la création d'une interface (SIF) vers la passerelle (PE) comprenant une adresse IP prédéfinie pointant vers l'équipement de local d'abonné (CPE) ; dans lequel l'adresse IP prédéfinie est une partie d'un espace d'adresse IP réservé seulement à des fins de test, l'adresse IP prédéfinie ne pointe vers aucun dispositif dans l'espace d'adresse de l'équipement de local d'abonné (CPE) et l'équipement de local d'abonné (CPE) comprend un itinéraire IP de retour vers la passerelle (PE) ;
la création d'une inondation de paquets de protocole de datagramme utilisateur, UDP, en boucle entre l'adresse IP prédéfinie pointant vers l'équipement de local d'abonné (CPE) et la passerelle (PE), ladite inondation de paquets UDP consommant la bande passante disponible entre la passerelle (PE) et l'équipement de local d'abonné (CPE) ; et
la mesure de la bande passante à partir de la quantité de données reçues au niveau de la passerelle (PE) et au niveau de l'équipement de local d'abonné (CPE).

2. Procédé selon la revendication 1, **caractérisé en ce que** la création de l'inondation de paquets UDP comprend les étapes suivantes :
l'envoi du paquet UDP du système de gestion de réseau (MGMT) à l'interface de passerelle (SIF) pointant vers l'adresse IP prédéfinie ;
l'envoi du paquet UDP de la passerelle (PE) à l'adresse IP prédéfinie et sa réception par l'équipement de local d'abonné (CPE) ;
l'envoi du paquet UDP de l'équipement de local d'abonné (CPE) à l'interface de passerelle (SIF) pointant vers l'adresse IP prédéfinie, en créant ainsi une boucle entre la passerelle (PE) et l'équipement de local d'abonné (CPE).

3. Procédé selon la revendication 2, **caractérisé en ce que** le procédé comprend les étapes suivantes :
la mise en place d'un paramètre de durée de vie pour le paquet UDP ; et
le calcul du nombre de paquets de données passés à partir de lectures de compteur de protocole simple de gestion de réseau, SNMP, et du temps écoulé durant le bouclage du paquet de données de test.

4. Procédé selon la revendication 3, **caractérisé en ce que** l'analyse de la bande passante de réseau comprend les étapes suivantes :
la lecture de ifInOctets au niveau de la passerelle (PE) pour l'interface (SIF) connectée de manière logique à l'équipement de local d'abonné (CPE), en acquérant ainsi la quantité de données reçues au niveau de la passerelle (PE) ;
la lecture de ifInOctets au niveau de l'équipement de local d'abonné (CPE) pour l'interface de passerelle (SIF) connectée de manière logique à la passerelle (PE), en acquérant ainsi la quantité de données reçues au niveau de l'équipement de local d'abonné (CPE).

5. Procédé selon la revendication 3, **caractérisé en ce que** le procédé comprend l'étape de calcul du temps écoulé à partir de la variable SNMP sysUpTime durant le bouclage du paquet UDP.

6. Procédé selon la revendication 1, **caractérisé en ce que** la taille minimale du paquet UDP est définie par la capacité de consommation de la bande passante disponible entre la passerelle (PE) et l'équipement de local d'abonné (CPE) et la taille maximale sans fragmentation lors du bouclage entre la passerelle (PE) et l'équipement de local d'abonné (CPE).

7. Système de mesure d'une bande passante de réseau dans un réseau de données comprenant un système de gestion de réseau (MGMT), une passerelle (PE) connectée au système de gestion de réseau (MGMT) et un équipement de local d'abonné (CPE) connecté à la passerelle (PE), **caractérisé en ce que** le système comprend :
des moyens pour créer une interface (SIF) vers la passerelle (PE) comprenant une adresse IP prédéfinie pointant vers l'équipement de local d'abonné (CPE) ; dans lequel l'adresse IP prédéfinie est une partie d'un espace d'adresse IP réservé seulement à des fins de test, l'adresse IP prédéfinie ne pointe vers aucun dispositif dans l'espace d'adresse de l'équipement de local d'abonné (CPE) et l'équipement de local d'abonné (CPE) comprend un itinéraire IP de retour vers la passerelle (PE) ;
des moyens pour créer une inondation de paquets de protocole de datagramme utilisateur, UDP, en boucle entre l'adresse IP prédéfinie au niveau de l'équipement de local d'abonné (CPE) et la passerelle (PE), ladite inondation de paquets UDP consommant la bande passante disponible entre la passerelle (PE) et l'équipement de local d'abonné (CPE) ; et
des moyens pour mesurer la bande passante à partir de la quantité de données reçues au niveau de la passerelle (PE) et au niveau de l'équipement de local d'abonné (CPE).

8. Système selon la revendication 7, **caractérisé en ce que** les moyens pour créer l'inondation de paquets UDP comprennent :
des moyens pour envoyer le paquet UDP du système de gestion de réseau à l'interface de passerelle (SIF) pointant vers l'adresse IP prédéfinie ;
des moyens pour envoyer le paquet UDP de la passerelle (PE) à l'adresse IP prédéfinie et sa réception par l'équipement de local d'abonné (CPE) ;
des moyens pour envoyer le paquet UDP de l'équipement de local d'abonné (CPE) à l'interface de passerelle (SIF) pointant vers l'adresse IP prédéfinie, en créant ainsi une boucle entre la passerelle (PE) et l'équipement de local d'abonné (CPE).

9. Système selon la revendication 8, **caractérisé en ce que** le système comprend :
des moyens pour mettre en place un paramètre de durée de vie pour le paquet UDP ; et
des moyens pour calculer le nombre de paquets de données passés à partir de lectures de compteur de protocole simple de gestion de réseau et du temps écoulé durant le bouclage du paquet UDP.

10. Système selon la revendication 9, **caractérisé en ce que** des moyens pour analyser la bande passante de réseau comprennent :
des moyens pour lire ifInOctets au niveau de la passerelle (PE) pour l'interface de passerelle (SIF) connectée de manière logique à l'équipement de local d'abonné (CPE), en acquérant ainsi la quantité de données reçues au niveau de la passerelle (PE) ;
des moyens pour lire ifInOctets au niveau de l'équipement de local d'abonné (CPE) pour l'interface de passerelle (SIF) connectée de manière logique à la passerelle (PE), en acquérant ainsi la quantité de données reçues au niveau de l'équipement de local d'abonné (CPE).

11. Système selon la revendication 9, **caractérisé en ce qu'**il comprend des moyens pour calculer le temps écoulé à partir de la variable SNMP sysUpTime durant le bouclage du paquet UDP.

12. Système selon la revendication 7, **caractérisé en ce que** la taille minimale du paquet UDP est définie par la capacité de consommation de la bande passante disponible entre la passerelle (PE) et l'équipement de local d'abonné (CPE) et la taille maximale sans fragmentation lors du bouclage entre la passerelle (PE) et l'équipement de local d'abonné (CPE).

13. Produit de programme informatique comprenant un support lisible par ordinateur supportant un code de programme informatique qui, quand il est exécuté par un ordinateur, exécute toutes les étapes du procédé selon les revendications 1 à 6.
